# EUROPÄISCHE PATENTSCHRIFT

(11) **EP 3 713 036 B1**
(45) Veröffentlichungstag und Bekanntmachung des Hinweises auf die Patenterteilung: **23.10.2024**
(21) Anmeldenummer: 20164243.6
(22) Anmeldetag: 19.03.2020
(51) Int. Cl.: H02J 3/24

(54) **VORRICHTUNG UND VERFAHREN ZUR VERBINDUNG DES SCHIRMS EINES HOCHSPANNUNGSKABELS MIT EINER ERDUNG**
DEVICE AND METHOD FOR CONNECTING THE SHIELD OF A HIGH VOLTAGE CABLE TO GROUND
DISPOSITIF ET PROCÉDÉ DE RACCORDEMENT DU BLINDAGE D'UN CÂBLE HAUTE TENSION À UNE MISE À LA TERRE

(30) Priorität: 21.03.2019 CH 3712019
(43) Veröffentlichungstag der Anmeldung: 23.09.2020
(73) Patentinhaber: Cabres GmbH, 3014 Bern (CH)
(72) Erfinder: Aeberhard, Martin, 3656 Tschingel (CH); Basler, Egon, 3014 Bern (CH)
(74) Vertreter: BOVARD AG

(56) Entgegenhaltungen:
- EP-A1- 2 685 581
- EP-A2- 1 126 573
- WO-A1-2007/072492

## Beschreibung

### Technisches Gebiet der Erfindung

Die vorliegende Erfindung bezieht sich auf eine Vorrichtung zur Verbindung des Schirms eines Hochspannungskabels mir einer Erdung. Insbesondere bezieht sich die vorliegende Erfindung auf eine Vorrichtung zur Verbindung des Schirms eines Hochspannungskabels mir einer Erdung, mittels welcher der Wert der tiefsten Resonanzfrequenz eines Netzes mit Hochspannungskabeln erhöht werden kann. Speziell betrifft die vorliegende Erfindung eine Vorrichtung mittels welcher die tiefste Resonanzfrequenz des Netzes mit Kabeln über eine vorbestimmte Grenzfrequenz erhöht werden kann. Die vorliegende Erfindung bezieht sich ausserdem auch auf ein Verfahren zur Verbindung des Schirms eines Hochspannungskabels mit einer Erdung, dank welchem die Resonanzfrequenz des Netzes mit Kabeln über eine vorbestimmte Grenzfrequenz erhöht werden kann.

### Stand der Technik

Der öffentliche Druck, Mittel- und Hochspannungsleitungen für die allgemeine öffentliche Stromversorgung, aber auch für die Bahnstromversorgung, verkabelt unterirdisch zu verlegen, nimmt zu. Bei der konkreten Frage der Verkabelung einer Leitung oder eines Leitungsabschnitts ist eine Vielzahl spezifischer Vor- und Nachteile, zum Beispiel ökonomische, ökologische, technische und betriebliche, beider Leitungsbauarten abzuwägen.

Eine technische und physikalische Grenze kann dabei die sehr hohe elektrische Kapazität eines Kabels darstellen. Zusammen mit den im Netz unvermeidbar vorhandenen Induktivitäten entstehen Schwingkreise mit derart tiefer Resonanzfrequenz, dass durch aktive Elemente, wie zum Beispiel Stromrichter und Triebfahrzeuge, Instabilitäten angeregt werden können. Mit zunehmender Länge von Hochspanungskabeln und entsprechender zunehmender Kabelkapazität nimmt der Wert der tiefsten Resonanzfrequenz des Hochspannungsnetzes ab. Fällt der Wert der tiefsten Resonanzfrequenz unter eine vom Netzbetreiber festgelegte Grenzfrequenz, oberhalb welcher sich Netzelemente nicht aktiv verhalten dürfen, ist ein stabiler Betrieb nicht mehr gewährleistet. Aktives Verhalten eines Elementes bedeutet in diesem Zusammenhang, dass das Element bei dieser Frequenz Energie in das Netz einspeisen kann. Wenn zum Beispiel ein Triebfahrzeug, welches bei einer bestimmten Frequenz Fa aktiv ist, in einem Netz mit der gleichen Resonanzfrequenz Fa und ungenügender Dämpfung verkehrt, kommt es zu einer Instabilität. Das Fahrzeug reagiert auf jede noch so kleine Spannungskomponente der Frequenz Fa mit einer Stromkomponente der Frequenz Fa, welche wiederum wegen der resonanzbedingt sehr hohen Netzimpedanz zu einer noch höheren Spannung mit der Frequenz Fa führt. Solange sich das System linear verhält, steigt die Spannung wegen dieses Vorgangs unbegrenzt weiter an. Begrenzend wirkt erst ein nichtlineares Verhalten, wie zum Beispiel Schutzabschaltungen, Ansprechen von Überspannungsableitern oder unkontrollierte Überschläge. Bestenfalls können Schäden verhindert werden. In jedem Fall sind aber grossflächige Betriebsstörungen die Folge.

Diese Resonanzproblematik ist besonders im Falle des 132-kV-Netzes der Schweizerischen Bundesbahnen (SBB) schwerwiegend. In der Schweiz wurden seit 1990 solche Instabilitäten schon mehrmals beobachtet. Die Phänomene manifestierten sich in Form von gleichzeitigen Schutzabschaltungen von Lokomotiven in weiten Teilen des Netzes. Sie führten zu grossen Betriebsstörungen und Zugsverspätungen. Aufgrund dieses Phänomens sind die Möglichkeiten weiterer unterirdischer Verkabelungen im schweizerischen Bahnstromnetz nahezu ausgeschöpft.

Ein Ansatz, der eine vorübergehende Entspannung der Problematik ermöglicht, ist die Senkung der in der Schweiz festgelegten Grenzfrequenz Fg von 103 Hz auf 87 Hz. Eine solche Senkung erfordert teure Umrüstungen der Netzelemente, insbesondere der Triebfahrzeuge, und ermöglicht nur etwa 100 zusätzliche Kilometer Stromkreislänge zu verkabeln.

Wichtig anzumerken ist, dass die beschriebenen Probleme nicht nur im elektrischen Energieversorgungsnetz der Schweizerischen Bundesbahnen vorkommen. Das Problem, in grösserer oder kleinerer Ausprägung, besteht grundsätzlich bei sämtlichen elektrischen Energieversorgungsnetzen, welche Hochspannungskabel aufweisen.

Aus der europäischen Patentanmeldung EP 1 126 573 A2 ist eine Bedämpfungseinrichtung für wenigstens ein elektrisches Kabel umfassend wenigstens eine Parallelschaltung aus wenigstens einer Induktivität und wenigstens einem Widerstand sowie wenigstens einer Kapazität bekannt, wobei die Parallelschaltung zwischen dem Schirmpotential des elektrischen Kabels und einem dazu unterschiedlichen Bezugspotential angeordnet ist. Durch diese Vorrichtung wird das vorwiegend kapazitive Verhalten von elektrischen Kabeln, das bei Hochspannungsleitungen besonders stark ausgeprägt ist, in den relevanten bzw. kritischen Frequenzbereichen in ein ohmsches-induktives Verhalten umgewandelt. Die hier vorgestellte Erfindung schlägt einen völlig anderen Lösungsansatz vor. Sie ermöglicht, Netze mit einer wesentlich höheren Kilometerlänge an Hochspannungskabeln stabil zu betreiben. Das ist besonders interessant für Inselnetze, bei denen der Kabelanteil grösser ist als im Verbundnetz.

Ausgehend vom Stand der Technik liegt der vorliegenden Erfindung daher die Aufgabe zugrunde, vorbesagte Nachteile der bekannten technischen Lösungen zu überwinden und eine Vorrichtung und ein Verfahren zur Verbindung des Schirms eines Hochspannungskabels mit einer Erdung vorzuschlagen, dank welchen die tiefste Resonanzfrequenz des Netzes erhöht und das Hochspannungsnetz stabil betrieben werden können.

### Zusammenfassung der Erfindung

Gemäss der vorliegenden Erfindung werden diese Ziele vor allem durch die Elemente der unabhängigen Ansprüche erreicht. Weitere vorteilhafte Ausführungsformen gehen ausserdem aus den abhängigen Ansprüchen und der Beschreibung hervor.

Insbesondere werden die Ziele der vorliegenden Erfindung durch eine Vorrichtung zur Verbindung des Schirms eines Hochspannungskabels aufweisend eine Kabeleigenkapazität mit einer Erdung erreicht, umfassend eine Vorrichtungskapazität und eine Induktivität, wobei die Vorrichtungskapazität und die Induktivität in Reihe zwischen Schirm und Erdung geschaltet sind, wobei die Werte der Induktivität und der Vorrichtungskapazität derart ausgewählt sind, dass die Resonanzfrequenz F der Vorrichtung +/- 10 Hz, vorteilhafterweise +/- 5 Hz, noch vorteilhafter +/- 2 Hz, der Grundfrequenz F1 des Hochspannungsnetzes, in welchem das Hochspannungskabel eingesetzt ist, gleichgesetzt ist, und derart, dass die tiefste Resonanzfrequenz F2 der Reihenschaltung aus der Vorrichtung und der Kabeleigenkapazität grösser als eine vom Betreiber des Hochspannungsnetzes vorbestimmte Grenzfrequenz Fg ist, oberhalb welcher sich Netzelemente des Hochspannungsnetzes nicht aktiv verhalten dürfen

Dank der erfindungsgemässen Vorrichtung kann gewährleistet werden, dass die Verbindung zwischen dem Schirm und der Erdung bei der Grundfrequenz F1 des Netzes so niederohmig wie möglich ist, während der Schirm bei den höheren und resonanzkritischen Frequenzen weitgehend das Potential des Hauptleiters des Hochspannungskabels annimmt. Die Kabelkapazität ist dann bei diesen Frequenzen quasi kurzgeschlossen und von aussen nicht mehr "sichtbar". Dadurch kann das Hochspannungsnetz stabil betrieben werden.

In einer ersten bevorzugten Ausführungsform der vorliegenden Erfindung, ist der Wert der Induktivität kleiner als 10 H, vorteilhaferweise kleiner als 5 H, noch vorteilhafter kleiner als 1 H, vorzugsweise kleiner als 100 mH Dadurch kann der Energieinhalt der Induktivität, welcher proportional zum Induktivitätswert ist, so klein wie möglich gehalten werden. Ausserdem wird dadurch die Spannungsbeanspruchung der Induktivität am geringsten. Durch diesen Ansatz wird zwar die benötigte Vorrichtungskapazität gross, der Energieinhalt und Spannungsbelastung der Vorrichtungskapazität werden hingegen ebenfalls minimal.

In einer weiteren bevorzugten Ausführungsform der vorliegenden Erfindung umfasst die Vorrichtung einen Dämpfungswiderstand, wobei der Dämp fungswiderstand parallel zur Reihenschaltung der Vorrichtungskapazität und Induktivität geschaltet ist. Durch die Schaltung eines Dämpfungswiderstands kann der Effekt einer nicht vernachlässigbaren Kapazität zwischen Schirm und Erde berücksichtigt werden.

In einer anderen bevorzugten Ausführungsform der vorliegenden Erfindung umfasst die Vorrichtung einen Trennschalter, wobei der Trennschalter zwischen dem Schirm des Hochspannungskabels und dem Schaltkreis aus Dämpfungswiderstand, Vorrichtungskapazität und Induktivität geschaltet ist. Dank dem Trennschalter kann an der Vorrichtung gearbeitet werden ohne diese physisch entfernen zu müssen.

In einer anderen bevorzugten Ausführungsform der vorliegenden Erfindung umfasst die Vorrichtung einen Überspannungsableiter, wobei der Überspannungsableiter parallel zum Schaltkreis aus Trennschalter, Dämpfungswiderstand, Vorrichtungskapazität und Induktivität geschaltet ist. Mit dem Überspannungsleiter ist der Kabelschirm auch dann geschützt, wenn es ein Unterbruch in der Vorrichtung gibt.

In einer weiteren bevorzugten Ausführungsform der vorliegenden Erfindung umfasst die Vorrichtung einen Bypass-schalter, wobei der Bypass-Schalter parallel zum Überspannungsableiter geschaltet ist. Mit dem Bypass-Schalter kann ein Schirmabschnitt geerdet werden, im Fall einer abgetrennten Vorrichtung.

In einer weiteren bevorzugten Ausführungsform der vorliegenden Erfindung ist die Frequenz F2 mehr als eineinhalbmal, vorteilhafterweise zweimal, noch vorteilhafter viermal, so gross wie die Grenzfrequenz Fg. Dadurch wird sichergestellt, dass die Frequenz F2 genug von der Grenzfrequenz entfernt ist, so dass das Hochspannungsnetz stabil betrieben werden kann.

In einer weiteren Ausführungsform sind die zwischen Schirm und Erdung in Reihe geschalteten Induktivität und Vorrichtungskapazität durch ein Filter höherer Ordnung oder ein aktives Filter ersetzt. Dank einem Filter höherer Ordnung oder einem aktiven Filter kann, wie mit den in Reihe geschalteten Induktivität und Vorrichtungskapazität, gewährleistet werden, dass die Verbindung zwischen dem Schirm und der Erdung bei der Grundfrequenz F1 des Netzes so niederohmig wie möglich ist, während der Schirm bei den höheren und resonanzkritischen Frequenzen weitgehend das Potential des Hauptleiters des Hochspannungskabels annimmt. Die Kabelkapazität ist dann bei diesen Frequenzen quasi kurzgeschlossen und von aussen nicht mehr "sichtbar". Dadurch kann das Hochspannungsnetz stabil betrieben werden. Ein Filter höherer Ordnung hat gegenüber dem Reheinschwingkreis aus Induktivität und Vorrichtungskapazität den Vorteil, dass ein ähnlicher Effekt, aber mit kleineren Komponenten, erzielt werden kann. Ein aktives Filter hat gegenüber dem Reheinschwingkreis aus Induktivität und Vorrichtungskapazität den Vorteil, dass ein ähnlicher Effekt, aber mit mehr Flexibilität und der Möglichkeit die Filter-Charakteristik zu modellieren, erzielt werden kann.

Die Ziele der Erfindung werden ausserdem auch durch ein Verfahren zur Verbindung des Schirms eines Hochspannungskabels aufweisend eine Kabeleigenkapazität mit einer Erdung erreicht, wobei ein erster LC-Reihenschwingkreis zwischen Schirm und Erdung hergestellt wird, wobei der erste LC-Reihenschwingkreis und die Kabeleigenkapazität einen zweiten LC-Reihenschwingkreis bilden, wobei die Resonanzfrequenz F des ersten LC-Reihenschwingkreises +/- 10 Hz, vorteilhafterweise, +/- 5 Hz, noch vorteilhafter +/- 2 Hz, der Grundfrequenz F1 des Hochspannungsnetzes, in welchem das Hochspannungskabel eingesetzt ist, gleichgesetzt wird, und dass die Resonanzfrequenz F2 des zweiten LC-Reihenschwingkreises grösser als eine vom Betreiber des Hochspannungsnetzes vorbestimmte Grenzfrequenz Fg gesetzt wird, oberhalb welcher sich Netzelemente des Hochspannungsnetzes nicht aktiv verhalten dürfen.

Dank der erfindungsgemässen Verfahren können Schirm und Erdung bei der Grundfrequenz des Netzes F1 so niederohmig wie möglich verbunden werden, während der Schirm bei den höheren und resonanzkritischen Frequenzen weitgehend das Potential des Hauptleiters des Hochspannungskabels annimmt.

In einer ersten Ausführungsform des erfindungsgemässen Verfahrens wird die Frequenz F2 mehr als eineinhalbmal, vorteilhafterweise zweimal, noch vorteilhafter viermal, so gross wie die Grenzfrequenz Fg gesetzt. Dadurch wird sichergestellt, dass die Frequenz F2 genug von der Grenzfrequenz Fg entfernt gesetzt wird, so dass das Hochspannungsnetz stabil betrieben werden kann.

In einer weiteren Ausführungsform des erfindungsgemässen Verfahrens umfasst der erste LC-Schwingkreis eine gemäss der vorliegenden Erfindung ausgebildete Vorrichtung. Dadurch kann das Verfahren besonders einfach umgesetzt werden.

In einer weiteren Ausführungsform des erfindungsgemässen Verfahrens wird der Schirm des Hochspannungskabels mittels mehrerer erster LC-Schwingkreise mit der Erdung verbunden.

In einer weiteren Ausführungsform des erfindungsgemässen Verfahrens wird Schirm des Hochspannungskabels zweiseitig mittels zwei erster LC-Schwingkreise mit der Erdung verbunden.

In einer weiteren Ausführungsform ist der erste LC-Reihenschwingkreis durch ein Filter höherer Ordnung oder ein aktives Filter ersetzt. Dank einem Filter höherer Ordnung oder einem aktiven Filter kann, wie mit den in Reihe geschalteten Induktivität und Vorrichtungskapazität, gewährleistet werden, dass die Verbindung zwischen dem Schirm und der Erdung bei der Grundfrequenz F1 des Netzes so niederohmig wie möglich ist, während der Schirm bei den höheren und resonanzkritischen Frequenzen weitgehend das Potential des Hauptleiters des Hochspannungskabels annimmt. Die Kabelkapazität ist dann bei diesen Frequenzen quasi kurzgeschlossen und von aussen nicht mehr "sichtbar". Dadurch kann das Hochspannungsnetz stabil betrieben werden. Ein Filter höherer Ordnung hat gegenüber dem ersten LC-Reihenschwingkreis den Vorteil, dass ein ähnlicher Effekt, aber mit kleineren Komponenten, erzielt werden kann. Ein aktives Filter hat gegenüber dem ersten LC-Reihenschwingkreis den Vorteil, dass ein ähnlicher Effekt, aber mit mehr Flexibilität und der Möglichkeit die Filter-Charakteristik zu modellieren, erzielt werden kann.

Weitere Einzelheiten der Erfindung gehen aus der nun folgenden Beschreibung der bevorzugten Ausführungsformen der Erfindung hervor, welche in den beigelegten Zeichnungen dargestellt sind. Aus der Beschreibung lassen sich auch die weiteren Vorteile der vorliegenden Erfindung entnehmen sowie Anregungen und Vorschläge, wie die Erfindungsgegenstände im Rahmen des Beanspruchten abgeändert oder auch weiterentwickelt werden könnte.

### Kurzbeschreibung der Zeichnungen

Figur 1 zeigt das Prinzip der Erdung des Schirms eines Hochspannungskabels wie aus dem Stand der Technik bekannt;
Figur 2 zeigt das Schaltbild der Vorrichtung zur Verbindung des Schirms eins Hochspannungskabels mit einer Erdung gemäss einer ersten Ausführungsform der vorliegenden Erfindung;
Figur 3 zeigt das Schaltbild der Vorrichtung zur Verbindung des Schirms eins Hochspannungskabels mit einer Erdung gemäss einer zweiten Ausführungsform der vorliegenden Erfindung, insbesondere wird durch diese Ausführungsform der Einfluss der Kapazität zwischen Kabelschirm und Erde berücksichtigt;
Figur 4 zeigt das Schaltbild der Vorrichtung zur Verbindung des Schirms eins Hochspannungskabels mit einer Erdung gemäss einer dritten Ausführungsform der vorliegenden Erfindung;
Figur 5 zeigt das Schaltbild eines konkreten Beispiels einer erfindungsgemässen Vorrichtung im Fall eines 29 km langen 132 kV-Kabels eines Bahnstromteilnetzes;
Figur 6 zeigt die ermittelte Admittanz des Bahnstromteilnetzes in Funktion der eingespeisten Frequenz mit und ohne dem in Figur 5 gezeigten Beispiel einer erfindungsgemässen Vorrichtung;
Figur 7 illustriert eine zweiseitige Erdung des Schirms eines Hochspannungskabels mittels zwei Vorrichtungen gemäss der zweiten Ausführungsform der vorliegenden Erfindung; und
Figur 8 illustriert eine zweiseitige Erdung des Schirms eines Hochspannungskabels mittels zwei Vorrichtungen gemäss der dritten Ausführungsform der vorliegenden Erfindung.

### Bevorzugte Ausführungsformen der Erfindung

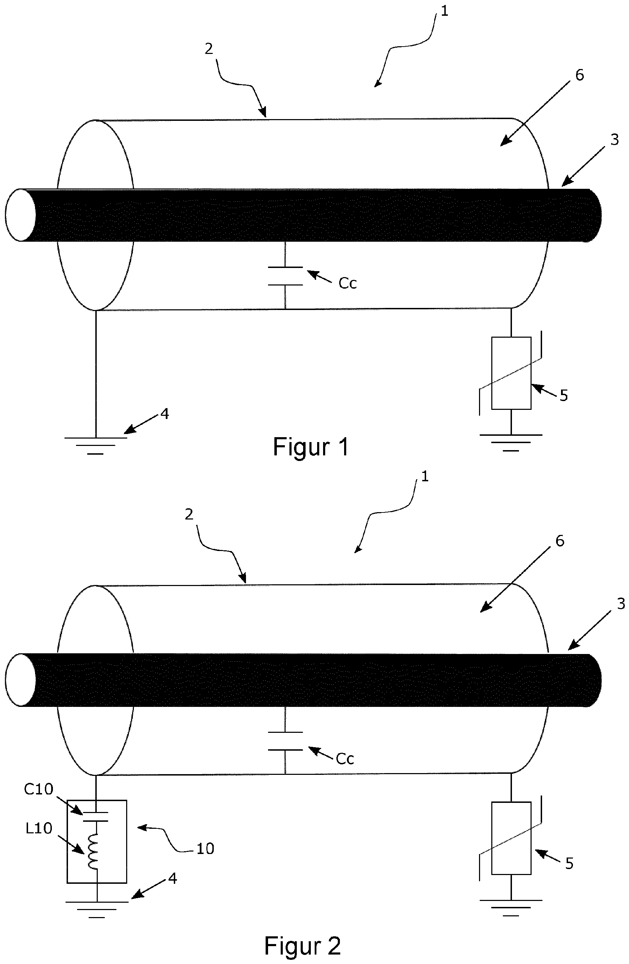

Figur 1 zeigt das Prinzip der Erdung des Schirms 2 eines Hochspannungskabels 1, mit Hauptleiter 3 und Kabeleigenkapazität Cc wie aus dem Stand der Technik bekannt. Auf der einen Seite ist der Schirm 2 direkt mit einer Erdung 4 verbunden. Um das Fliessen von Ausgleichsströmen, insbesondere Traktions-Rückströmen im Bahnsystem, über den Schirm 2 zu verhindern, wird der Schirm 2 nur auf der einen Seite geerdet. Auf der anderen, nicht geerdeten Seite sorgt ein Überspannungsableiter 5 dafür, dass im Kurzschlussfall die Schirm-Erde-Spannung auf einen für die äussere Isolation vorbestimmten unkritischen Wert begrenzt wird.

Wegen der direkten Erdung ist die volle Kabeleigenkapazität Cc zwischen Hauptleiter 3 und Erde wirksam. Der Schirm 2 dient dazu, im Dielektrikum 6 das starke elektrische Feld so zu "steuern", dass die durch das elektrische Feld entstehende Belastung möglichst homogen ist. Andernfalls besteht das Risiko sehr hoher lokaler elektrischer Feldstärken, welche zu einer Zerstörung des Dielektrikums 6 führen können. Nachteilig ist allerdings die grosse Kapazität Cc zwischen dem Hauptleiter 3 und dem Schirm 2, welche zusammen mit induktiven Elementen im Netz (hier nicht gezeigt) zu den oben beschriebenen Resonanzproblemen führen können.

Figur 2 zeigt das Schaltbild einer Vorrichtung 10 zur Verbindung des Kabelschirms 2 mit einer Erdung 4 gemäss einer ersten Ausführungsform der vorliegenden Erfindung. Die Vorrichtung 10 umfasst eine Vorrichtungskapazität C10 und eine Induktivität L10, die in Reihe zwischen Schirm 2 des Kabels 1 und Erdung 4 geschaltet sind.

Die vorliegende Erfindung basiert auf dem Konzept, dass hohe Spannungen, und somit die hohen Belastungen des Dielektrikums 6, nur bei der Grundfrequenz F1 des Netzes auftreten. Deshalb ist es genügend, dass der Schirm 2 bei der Grundfrequenz F1 mit der Erdung 4 so niederohmig wie möglich verbunden ist. Hingegen ist es wünschenswert, dass bei den höheren und resonanzkritischen Frequenzen der Schirm 2 das Potential des Hauptleiters 3 annimmt. Die Kabeleigenkapazität Cc des Kabels 1 ist dann bei diesen Frequenzen von aussenbetrachtet scheinbar null.

Um dieses Vorhaben zu realisieren, sollen die Kapazitätswerte und die Induktivitätswerte von den Bauelementen C10 und L10 so ausgewählt werden, dass die Resonanzfrequenz F der Vorrichtung 10 der Grundfrequenz F1 des Netzes entspricht.

Darüber hinaus bildet die Reihenschaltung von Cc und C10 zusammen mit L10 ebenfalls einen Reihenresonanzkreis, zwischen Hauptleiter 3 und Erdung 4. Wenn L10 und C10 zusätzlich so ausgewählt werden, dass die Resonanzfrequenz F2 von diesem Resonanzkreis oberhalb der vorbestimmten Grenzfrequenz Fg liegt, dann ist sichergestellt, dass sich Netzelemente, welche ein aktives Verhalten unterhalb von Fg aufweisen, keine Netz-Instabilitäten anregen können. Es wird hier auf eine detaillierte Herleitung der geeigneten Werte für C10 und L10 in Abhängigkeit von F1, Fg und Cc verzichtet. Diese können aber von einem Fachmann ohne Schwierigkeiten ermittelt werden.

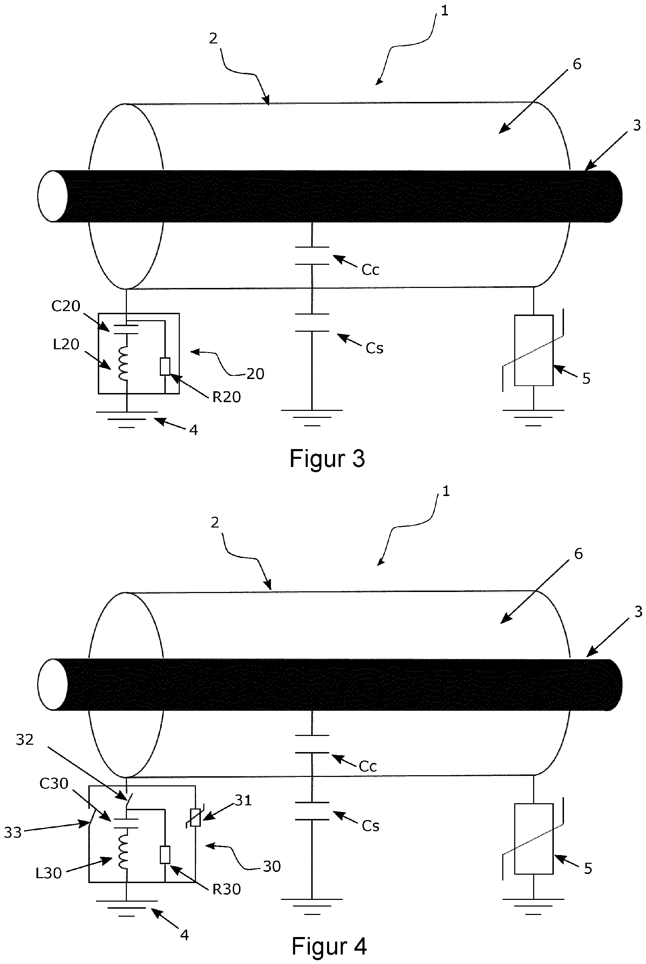

Figur 3 zeigt das Schaltbild einer Vorrichtung 20 zur Verbindung des Kabelschirms 2 mit einer Erdung 4 gemäss einer zweiten Ausführungsform der vorliegenden Erfindung. Die Vorrichtung 20 umfasst neben der Vorrichtungskapazität C20 und Induktivität L20 einen Dämpfungswiderstand R20, der parallel zu den anderen zwei Elementen geschaltet ist. Es ist wichtig zu beachten, dass es möglich wäre, den Dämpfungswiderstand R20 auch anders zu schalten. Zum Beispiel könnte der Dämpfungswiderstand R20 nur zur Vorrichtungskapazität C20 oder nur zur Induktivität L20 parallel geschaltet werden. Gegenüber der Vorrichtung 10 der ersten Ausführungsform, ist dank der Vorrichtung 20 möglich, auch der Kapazität Cs zwischen Schirm 2 und Erde Rechnung zu tragen. Die Kapazität Cs, welche nur wirksam ist, wenn Schirm 2 und Erde nicht kurzgeschlossen sind, kann nämlich sehr unterschiedliche Werte annehmen und kann nicht immer vernachlässigt werden.

Analog zur Vorrichtung 10, werden bei der Vorrichtung 20 die Werte von C20 und L20 so ausgewählt, dass sich die Impedanz der Vorrichtung 20 mit zunehmender Frequenz erhöht. Wenn jetzt wie in Figur 3 die Kapazität Cs berücksichtigt wird, wird es einem Fachmann klar, dass mit zunehmender Frequenz nur noch die Reihenschaltung Cc-Cs zwischen Hauptleiter 3 und Erde wirksam ist. Mit anderen Worten: Wenn Cs vorhanden ist, wird der Effekt der Vorrichtung 20 vermindert. Leider ist es konstruktiv aber nicht möglich, die Impedanz der Reihenschaltung Cc-Cs mit einem Widerstand zu erhöhen. Hingegen ist es möglich, den Dämpfungswiderstand R20 parallel zu L20 und C20, und somit auch parallel zu Cs zu schalten. Mit einer geschickten Wahl der Werte für C20, L20 und R20 kann sichergestellt werden, dass die Resonanzfrequenz F2 oberhalb der vorbestimmten Grenzfrequenz Fg liegt. Dadurch ist es auch möglich, die Anzahl Kabelkilometer auch in diesem Fall zu erhöhen, ohne Instabilitäten im Netz zu erzeugen. Es wird wiederum auf eine detaillierte Herleitung der geeigneten Werte für C20, L20 und R20 in Abhängigkeit von F1, Fg, Cc und Cs verzichtet. Diese können aber von einem Fachmann ohne Schwierigkeiten ermittelt werden.

Figur 4 zeigt das Schalbild einer Vorrichtung 30 zur Verbindung des Kabelschirms 2 mit einer Erdung 4 gemäss einer dritten Ausführungsform der vorliegenden Erfindung. Neben der Vorrichtungskapazität C30, der Induktivität L30 und dem Dämpfungswiderstand R30 umfasst die Vorrichtung 30 zusätzlich einen Überspannungsleiter 31 zum Schutz des Kabelschirms 2 bei einem Unterbruch in der Vorrichtung 30, einen Trennschalter 32, welcher Arbeit an der Vorrichtung 30 ermöglicht, und einen Bypass-Schalter 33 zur Erdung eines Schirmabschnitts im Fall einer abgetrennten Vorrichtung 30. Darüber hinaus könnte die Vorrichtung 30 vorteilhafterweise noch Messwandler für ihre Überwachung umfassen. Auch hier könnte der Dämpfungswiderstand R30 nur zur Vorrichtungskapazität C30 oder nur zur Induktivität L30 parallel geschaltet werden.

Die Wirkung der erfindungsgemässen Vorrichtung wird anhand eines konkreten Beispiels aufgezeigt. Wie schon oben erwähnt, ist die Resonanzproblematik im Hochspannungsnetz der Schweizerischen Bundesbahnen (SBB) besonders prägnant, weil schon viele Kilometer Hochspannungskabels unterirdisch verlegt worden sind. Die Grenzfrequenz Fg, unter welcher sich kein Element dieses Hochspannungsnetzes aktiv verhalten darf, wurde von der SBB auf 103 Hz gesetzt. Mit dieser Grenzfrequenz besteht kein Spielraum mehr zur Verkabelung weiterer Hochspannungsleitungen, oder zum Bau weiterer Kabelleitungen beispielsweise durch lange Tunnel. Die SBB haben darauf reagiert und verschiedene und aufwendige Massnahmen, unter anderen die Umrüstung von Treibfahrzeugen, ergriffen, durch welche die Grenzfrequenz Fg von 103 Hz auf 87 Hz herabgesetzt werden kann. Dadurch können ca. 100 km zusätzliche unterirdische Hochspannungskabel verlegt werden.

Dennoch braucht es einen langfristigen Ansatz, welcher die Verlegung von zusätzlichen Kabelkilometern ermöglicht, ohne die Grenzfrequenz Fg nochmals herabsetzen zu müssen. Die angestrebten 87 Hz stellen heutzutage ein technisch gesehen absolutes Minimum. Wie unten demonstriert, stellt die erfindungsgemässe Vorrichtung eine mögliche und einfache Lösung zu dieser Problematik.

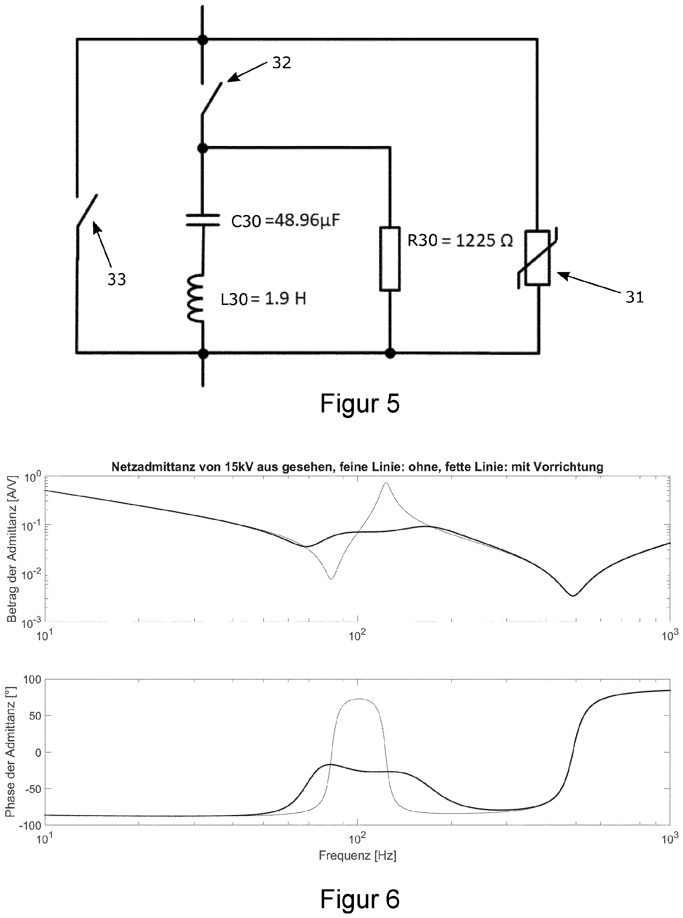

Figur 5 zeigt ein konkretes Beispiel einer erfindungsgemässen Vorrichtung, welches für die quantitative und qualitative Einschätzung der Wirkung der vorliegenden Erfindung genutzt wurde. Die in dieser Figur gezeigten Werte der Vorrichtungskapazität, der Induktivität und der Dämpfungswiderstand wurden für ein ca. 29 km langes und in sieben 4km lange Abschnitte unterteiltes 132 kV-Kabel eines Teilnetzes der SBB ermittelt.

Figur 6 zeigt die ermittelte Admittanz des Netzes, betrachtet von einem Treibfahrzeug, welches auf dem entsprechenden Schienennetz verkehrt, in Abhängigkeit von der eigenspeisten Frequenz eines Anregungs-Signals. Die Kurve mit dem dünnen Strich zeigt die ermittelte Admittanz ohne erfindungsgemässe Vorrichtung. Wie dieser Kurve gut zu entnehmen ist, wird ohne erfindungsgemässe Vorrichtung eine prägnante Resonanz bei ca. 83 Hz beobachtet. Damit ist diese Netzkonfiguration grundsätzlich nicht zulässig, weil die tiefste Resonanzfrequenz deutlich unter der Grenzfrequenz Fg von 103 Hz liegt. Auch im Fall der vorgesehenen Reduktion der Grenzfrequenz Fg auf 87 Hz ist die Situation nicht zulässig.

Schaltet man nun bei jedem ca. 4 km langen Abschnitt des 29 km langen Kabels eine Vorrichtung gemäss Figur 5, wird die Kurve mi dem dicken Strich ermittelt. Es ist deutlich zu sehen, dass das Teilnetz mit erfindungsgemässen Vorrichtungen nun keine kritische Resonanzstelle mehr aufweist. Die erste Resonanzstelle liegt bei einer Frequenz von ca. 488 Hz, also sehr weit oberhalb der Grenzfrequenz Fg von 87 Hz beziehungsweise 103 Hz. Dieses Beispiel zeigt nachdrücklich die Wirkung der erfindungsgemässen Vorrichtung.

Unabhängig von der vorliegenden Erfindung werden die Schirme der in diesem Beispiel auf der nicht geerdeten Seite mit 6-kV-Überspannungsableitern geschützt. Deshalb wurde im Beispiel von Figur 5 ein 6 kV-Überspannungsableiter 31 vorgesehen. Es wurde gezeigt, dass mit der Schaltung einer erfindungsgemässen Vorrichtung bei einer Frequenz von 488 Hz eine maximale Spannung von ca. 2 kV zu erwarten ist, also deutlich im zulässigen Bereich.

Es ist wichtig zu beachten, dass die Figuren 5 und 6 nur als Beispiele dargestellt sind und keinesfalls als einschränkend angesehen werden sollten. Insbesondere ist es wichtig zu beachten, dass die vorliegende Erfindung im Zusammenhang mit verschiedenen Arten von Hochspannungsnetzen gebraucht werden kann, und dass sie keinesfalls nur Anwendung im Bahnbereich oder nur im Stromnetz der Schweizerischen Bundesbahnen findet. Im gezeigten Beispiel liegt der Fokus auf zweiphasigen Netzen der Bahnstromversorgung mit 132 kV und einer Netzfrequenz von 16.7 Hz. Die vorliegende Erfindung ist aber auch anwendbar in Netzen mit abweichender Spannung, Frequenz oder Anzahl Phasen. Es ist auch wichtig zu beachten, dass die genauen Werte der Vorrichtungskapazitäten (010,020,030), der Induktivitäten (L10,L20,L30) und der Dämpfungswiderstände (R20,R30) entsprechend der bestimmten Anwendung gewählt werden müssen. Die Werte hängen unter anderen von der Netzspannung, von den weiteren im Netz vorhandenen Elementen, wie zum Beispiel, Induktivitäten und von der Kabellänge ab.

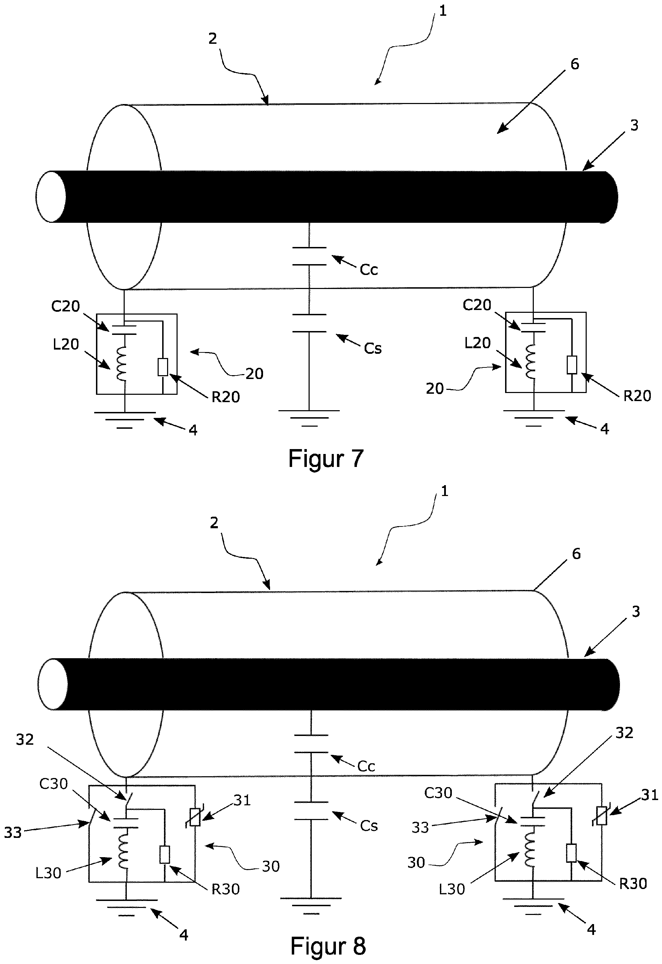

Es ist ausserdem auch wichtig zu beachten, dass mehrere erfindungsgemässe Vorrichtungen 10, 20, 30 für die Erdung des Schirms eines Hochspannungskabels kombiniert werden können. Insbesondere kann mittels erfindungsgemässer Vorrichtungen 10, 20, 30 der Schirm eines Hochspannungskabels zweiseitig geerdet werden, wie in den Figuren 7 und 8 illustriert. Figur 7 zeigt eine zweiseitige Erdung des Schirms mittels zwei Vorrichtungen 20 gemäss der zweiten Ausführungsform der vorliegenden Erfindung. Figur 8 hingegen zeigt eine zweiseitige Erdung des Schirms mittels zwei Vorrichtungen 30 gemäss der dritten Ausführungsform der vorliegenden Erfindung. Auch wenn Figuren 7 und 8 eine zweiseitige Erdung des Schirms mit gleichartigen Vorrichtungen zeigen, ist es durchaus auch möglich, eine zweiseitige Erdung des Schirms mit zwei unterschiedlichen Vorrichtungen 10, 20, 30, zum Beispiel mit einer Vorrichtung 20 gemäss der zweiten Ausführungsform der vorliegenden Erfindung und einer Vorrichtung 30 gemäss der dritten Ausführungsform der vorliegenden Erfindung, zu realisieren. Selbstverständlich können ausserdem auch Vorrichtungen 10 gemäss der ersten Ausführungsform der vorliegenden Erfindung für eine zweiseitige Erdung eingesetzt werden. Wichtig zu beachten ist, dass die Vorrichtungskapazitäten C10, C20, C30, die Induktivitäten L10, L20, L30, die Dämpfungswiderstände R20, R30 und die Überspannungsableiter 31 der jeweiligen Vorrichtungen 10, 20, 30 unterschiedlich sein können, selbst wenn zwei gleichartige Vorrichtungen 10, 20, 30 für die zweiseitige Erdung eingesetzt werden. Hier wird auch noch einmal explizit hingewiesen, dass mehrere Vorrichtungen 10, 20, 30 entlang des Schirms eines Hochspannungskabels vorgesehen werden können, um ein optimales Ergebnis erreichen zu können.

Darüber hinaus können die zwischen Schirm 2 und Erdung 4 in Reihe geschalteten Induktivität L10, L20, L30 und Vorrichtungskapazität C10, C20, C30 durch ein Filter höherer Ordnung oder ein aktives Filter ersetzt werden. Dank einem Filter höherer Ordnung oder einem aktiven Filter kann, wie mit den in Reihe geschalteten Induktivität und Vorrichtungskapazität, gewährleistet werden, dass die Verbindung zwischen dem Schirm und der Erdung bei der Grundfrequenz F1 des Netzes so niederohmig wie möglich ist, während der Schirm bei den höheren und resonanzkritischen Frequenzen weitgehend das Potential des Hauptleiters des Hochspannungskabels annimmt. Die Kabelkapazität ist dann bei diesen Frequenzen quasi kurzgeschlossen und von aussen nicht mehr "sichtbar". Dadurch kann das Hochspannungsnetz stabil betrieben werden. Ein Filter höherer Ordnung hat gegenüber dem Reheinschwingkreis aus Induktivität und Vorrichtungskapazität den Vorteil, dass ein ähnlicher Effekt, aber mit kleineren Komponenten, erzielt werden kann. Ein aktives Filter hat gegenüber dem Reheinschwingkreis aus Induktivität und Vorrichtungskapazität den Vorteil, dass ein ähnlicher Effekt, aber mit mehr Flexibilität und der Möglichkeit die Filter-Charakteristik zu modellieren, erzielt werden kann.

Zum Schluss sei nochmals darauf hingewiesen, dass die hier beispielhaft beschriebenen Ausführungsformen nur Realisierungsmöglichkeiten der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden.

## Patentansprüche

1. Vorrichtung (10, 20, 30) zur Verbindung des Schirms (2) eines Hochspannungskabels (1) aufweisend eine Kabeleigenkapazität (Cc) mit einer Erdung (4), umfassend eine Vorrichtungskapazität (C10, C20, C30) und eine Induktivität (L10, L20, L30), wobei die Vorrichtungskapazität (C10, C20, C30) und die Induktivität (L10,L20,L30) zwischen Schirm (2) und Erdung (4) geschaltet sind,
**dadurch gekennzeichnet, dass** die Vorrichtungskapazität (C10,C20,C30) und die Induktivität (L10,L20,L30) in Reihe geschaltet sind, und dass
die Werte der Induktivität (L10, L20, L30) und der Vorrichtungskapazität (C10, C20, C30) derart ausgewählt sind, dass die Resonanzfrequenz F der Vorrichtung (10, 20, 30) +/- 10Hz, vorteilhafterweise +/- 5Hz, noch vorteilhafter +/- 2Hz, gleich der Grundfrequenz F1 des Hochspannungsnetzes, in welchem das Hochspannungskabel (1) eingesetzt ist, gleichgesetzt ist, und derart, dass die tiefste Resonanzfrequenz F2 der Reihenschaltung aus der Vorrichtung (10, 20, 30) und der Kabeleigenkapazität (Cc) grösser als eine vom Betreiber des Hochspannungsnetzes vorbestimmte Grenzfrequenz Fg ist, oberhalb welcher sich Netzelemente des Hochspannungsnetzes nicht aktiv verhalten dürfen.

2. Vorrichtung (10, 20, 30) gemäss Anspruch 1, wobei der Wert der Induktivität (L10, L20, L30) kleiner als 10H, vorteilhaferweise kleiner als 5H, noch vorteilhafter kleiner als 1H, vorzugsweise kleiner als 100mH ist.

3. Vorrichtung (20, 30) gemäss einem der Ansprüche 1 oder 2 umfassend einen Dämpfungswiderstand (R20, R30), wobei der Dämpfungswiderstand (R20, R30) parallel zur Reihenschaltung der Vorrichtungskapazität (C20, C30) und Induktivität (L20, L30) geschaltet ist.

4. Vorrichtung (30) gemäss Anspruch 3 umfassend einen Trennschalter (32), wobei der Trennschalter (32) zwischen dem Schirm (2) des Hochspannungskabels (1) und dem Schaltkreis aus Dämpfungswiderstand (R30), Vorrichtungskapazität (C30) und Induktivität (L30) geschaltet ist.

5. Vorrichtung (30) gemäss Anspruch 4 umfassend einen Überspannungsableiter (31), wobei der Überspannungsableiter (31) parallel zum Schaltkreis aus Trennschalter (32), Dämpfungswiderstand (R30), Vorrichtungskapazität (C30) und Induktivität (L30) geschaltet ist.

6. Vorrichtung (30) gemäss Anspruch 5 umfassend einen Bypass-schalter (33), wobei der Bypass-schalter (33) parallel zum Überspannungsableiter (31) geschaltet ist.

7. Vorrichtung (10, 20, 30) gemäss einem der vorherigen Ansprüche wobei die Frequenz F2 mehr als eineinhalbmal, vorteilhafterweise zweimal, noch vorteilhafter viermal, so gross wie die Grenzfrequenz Fg ist.

8. Verfahren zur Verbindung des Schirms (2) eines Hochspannungskabels (1) aufweisend eine Kabeleigenkapazität (Cc) mit einer Erdung (4), wobei ein erster LC-Reihenschwingkreis zwischen Schirm (2) und Erdung (4) hergestellt wird, wobei der erste LC-Reihenschwingkreis und die Kabeleigenkapazität (Cc) einen zweiten LC-Reihenschwingkreis bilden,
**dadurch gekennzeichnet, dass**
die Resonanzfrequenz F des ersten LC-Reihenschwingkreises +/-10Hz, vorteilhafterweise, +/- 5Hz, noch vorteilhafter +/- 2Hz, der Grundfrequenz F1 des Hochspannungsnetzes, in welchem das Hochspannungskabel (1) eingesetzt ist, gleichgesetzt wird, und dass die Resonanzfrequenz F2 des zweiten LC-Reihenschwingkreises grösser als eine vom Betreiber des Hochspannungsnetzes vorbestimmte Grenzfrequenz Fg gesetzt wird, oberhalb welcher sich Netzelemente des Hochspannungsnetzes nicht aktiv verhalten dürfen

9. Verfahren gemäss Anspruch 8, wobei die Frequenz F2 mehr als eineinhalbmal, vorteilhafterweise zweimal, noch vorteilhafter viermal, so gross wie die Grenzfrequenz Fg gesetzt wird.

10. Verfahren gemäss einem der Ansprüche 8 oder 9, wobei der erste LC-Schwingkreis eine gemäss einem der Ansprüche 1 bis 7 ausgebildete Vorrichtung (10, 20, 30) umfasst.

11. Verfahren gemäss einem der Ansprüche 8 bis 10, wobei der Schirm (2) des Hochspannungskabels (1) mittels mehrerer erster LC-Schwingkreise mit der Erdung (4) verbunden wird.

12. Verfahren gemäss Anspruch 11, wobei der Schirm (2) des Hochspannungskabels (1) zweiseitig mittels zwei erster LC-Schwingkreise mit der Erdung (4) verbunden wird.

## Claims

1. Device (10, 20, 30) for connecting the shield (2) of a high-voltage cable (1) having a cable intrinsic capacitance (Cc) with a ground (4), comprising a device capacitance (C10, C20, C30) and an inductance (L10, L20, L30), whereby the device capacitance (C10, C20, C30) and the inductance (L10, L20, L30) are connected between the shield (2) and the ground (4),
**characterized in that** the device capacitance (C10, C20, C30) and the inductance (L10, L20, L30) are connected in series, and **in that**
the values of the inductance (L10, L20, L30) and the device capacitance (C10, C20, C30) are selected in such a way that the resonant frequency F of the device (10, 20, 30) +/- 10Hz, advantageously +/- 5Hz, even more advantageously +/- 2Hz, is set equal to the fundamental frequency F1 of the high-voltage network in which the high-voltage cable (1) is used, and in such a way that the lowest resonant frequency F2 of the series connection out of the device (10, 20, 30) and the cable intrinsic capacitance (Cc) is greater than a frequency predetermined by the operator of the high-voltage network, and such that the lowest resonant frequency F2 of the series connection of the device (10, 20, 30) and the cable intrinsic capacitance (Cc) is greater than a limit frequency Fg predetermined by the operator of the high-voltage network, above which network elements of the high-voltage network may not behave actively.

2. Device (10, 20, 30) according to claim 1, whereby the value of the inductance (L10, L20, L30) is less than 10H, advantageously less than 5H, even more advantageously less than 1H, preferably less than 100mH.

3. Device (20, 30) according to one of the claims 1 or 2 comprising a damping resistor (R20, R30), whereby the damping resistor (R20, R30) is connected in parallel with the series connection of the device capacitance (C20, C30) and inductance (L20, L30).

4. Device (30) according to claim 3 comprising an isolating switch (32), the isolating switch (32) being connected between the shield (2) of the high-voltage cable (1) and the circuit comprising damping resistor (R30), device capacitance (C30) and inductance (L30).

5. Device (30) according to claim 4, comprising an overvoltage arrester (31), the overvoltage arrester (31) being connected in parallel with the circuit comprising isolating switch (32), damping resistor (R30), device capacitance (C30) and inductance (L30).

6. Device (30) according to claim 5, comprising a bypass switch (33), the bypass switch (33) being connected in parallel with the overvoltage arrester (31).

7. Device (10, 20, 30) according to one of the preceding claims, whereby the frequency F2 is more than one and a half times, advantageously twice, even more advantageously four times, as high as the limit frequency Fg.

8. Method for connecting the shield (2) of a high-voltage cable (1) having a cable intrinsic capacitance (Cc) to a ground (4), a first LC series resonant circuit being produced between the shield (2) and the ground (4), the first LC series resonant circuit and the cable intrinsic capacitance (Cc) forming a second LC series resonant circuit,
**characterized in that**
the resonant frequency F of the first LC series resonant circuit +/-10Hz, advantageously +/- 5Hz, even more advantageously +/- 2Hz, is set equal to the fundamental frequency F1 of the high-voltage network in which the high-voltage cable (1) is used, and **in that** the resonant frequency F2 of the second LC series resonant circuit is set greater than a limit frequency Fg predetermined by the operator of the high-voltage network, above which network elements of the high-voltage network may not behave actively.

9. Method according to claim 8, wherein the frequency F2 is more than one and a half times, advantageously twice, even more advantageously four times, as high as the limit frequency Fg.

10. Method according to one of the claims 8 or 9, whereby the first LC resonant circuit comprises a device (10, 20, 30) designed according to one of the claims 1 to 7.

11. Method according to one of the claims 8 to 10, whereby the shield (2) of the high-voltage cable (1) is connected to the ground (4) by means of a plurality of first LC resonant circuits.

12. Method according to claim 11, whereby the shield (2) of the high-voltage cable (1) is connected to ground (4) on two sides by means of two first LC resonant circuits.

## Revendications

1. Dispositif (10, 20, 30) de raccordement du blindage (2) d'un câble haute tension (1) ayant une capacité intrinsèque (Cc) mise à la terre (4), comprenant une capacité de dispositif (C10, C20, C30) et une inductance (L10, L20, L30), la capacité du dispositif (C10, C20, C30) et l'inductance (L10, L20, L30) étant connectées entre le blindage (2) et la mise à la terre (4),
**caractérisé en ce que** la capacité du dispositif (C10, C20, C30) et l'inductance (L10, L20, L30) sont montées en série et **en ce que**
les valeurs de l'inductance (L10, L20, L30) et de la capacité du dispositif (C10, C20, C30) sont choisies de manière à ce que la fréquence de résonance F du dispositif (10, 20, 30) soit égale à la fréquence fondamentale F1 du réseau à haute tension dans lequel le câble à haute tension (1) est utilisé, dans une plage +/- 10Hz, avantageusement de +/- 5Hz, et encore plus avantageusement +/- 2Hz, et de manière à ce que la fréquence de résonance la plus basse F2 du montage en série dispositif (10, 20, 30) et de la capacité intrinsèque du câble (Cc) soit supérieure à une fréquence prédéterminée par l'opérateur du réseau à haute tension, et de telle sorte que la fréquence de résonance la plus basse F2 de la connexion en série du dispositif (10, 20, 30) et de la capacité intrinsèque du câble (Cc) soit supérieure à une fréquence limite Fg prédéterminée par l'opérateur du réseau à haute tension, au-dessus de laquelle les éléments du réseau à haute tension ne peuvent pas se comporter activement.

2. Dispositif (10, 20, 30) selon la revendication 1, la valeur de l'inductance (L10, L20, L30) étant inférieure à 10H, avantageusement inférieure à 5H, encore plus avantageusement inférieure à 1H, et de préférence inférieure à 100mH.

3. Dispositif (20, 30) selon la revendication 1 ou 2 comprenant une résistance d'amortissement (R20, R30), la résistance d'amortissement (R20, R30) étant connectée en parallèle à la capacité du dispositif (C20, R30) et de l'inductance (L20, L30) montées en série.

4. Dispositif (10, 20, 30) selon la revendication 3 comprenant un interrupteur d'isolement (32), l'interrupteur d'isolement (32) étant connecté entre le blindage (2) du câble haute tension (1) et le circuit comprenant la résistance d'amortissement (R30), la capacité du dispositif (C30) et l'inductance (L30).

5. Dispositif (10, 20, 30) selon la revendication 4, comprenant un dérivateur de surtension (31), le dérivateur de surtension (31) étant connecté en parallèle au circuit comprenant l'interrupteur d'isolement (32), la résistance d'amortissement (R30), la capacité de dispositif (C30) et l'inductance (L30).

6. Dispositif (10, 20, 30) selon la revendication 5, comprenant un commutateur de dérivation (33), le commutateur de dérivation (33) étant connecté en parallèle avec le dérivateur de surtension (31).

7. Dispositif (10, 20, 30) selon l'une des revendications précédentes, la fréquence F2 étant plus d'une fois et demie, avantageusement deux fois, encore plus avantageusement quatre fois, plus grande que la fréquence limite Fg.

8. Procédé de connexion du blindage (2) d'un câble haute tension (1) ayant une capacité intrinsèque de câble (Cc) à une mise à la terre (4), un premier circuit résonant en série LC étant monté entre le blindage (2) et la mise à la terre (4), le premier circuit résonnant en série LC et la capacité intrinsèque du câble (Cc) formant un deuxième circuit résonnant en série LC, la capacité intrinsèque du câble (Cc) formant un deuxième circuit résonnant en série LC,
**caractérisé en ce que**
la fréquence de résonance F du premier circuit résonnant en série LC est égale à la fréquence fondamentale F1 du réseau haute tension dans lequel le câble haute tension (1) est utilisé, dans une plage de +/- 10Hz, avantageusement +/- 5Hz, encore plus avantageusement +/- 2Hz, et **en ce que** la fréquence de résonance F2 du deuxième circuit résonant en série LC est supérieure à une fréquence limite Fg prédéterminée par l'opérateur du réseau haute tension, au-dessus de laquelle les éléments du réseau à haute tension ne peuvent pas se comporter activement.

9. Procédé selon la revendication 8, dans lequel la fréquence F2 est égale à plus d'une fois et demie, avantageusement deux fois, encore plus avantageusement une fois et demie la fréquence limite Fg.

10. Procédé selon l'une des revendications 8 ou 9, dans lequel le premier circuit résonnant LC comprend un dispositif (10, 20, 30) conçu selon l'une des revendications 1 à 7.

11. Procédé selon l'une des revendications 8 à 10, dans lequel le blindage (2) du câble haute tension (1) est relié à la mise à la terre (4) au moyen d'une pluralité de premiers circuits résonants LC.

12. Procédé selon la revendication 11, dans lequel le blindage (2) du câble haute tension (1) est relié de part et d'autre à la mise à la terre (4) au moyen de deux premiers circuits résonnants LC.
